# EUROPÄISCHE PATENTSCHRIFT

(11) **EP 3 126 268 B1**
(45) Veröffentlichungstag und Bekanntmachung des Hinweises auf die Patenterteilung: **02.01.2019**
(21) Anmeldenummer: 15714657.2
(22) Anmeldetag: 18.03.2015
(51) Int. Cl.: B65F 3/02, B60P 1/54, B66C 23/70

(54) **HEBEVORRICHTUNG FÜR EIN LASTKRAFTFAHRZEUG ZUM ENTLEEREN VON ABFALLSAMMELBEHÄLTER**
LIFTING DEVICE FOR A TRUCK FOR EMPTYING WASTE CONTAINERS
DISPOSITIF DE LEVAGE POUR UN CAMION POUR VIDER DES CONTENEURS À DÉCHETS

(30) Priorität: 04.04.2014 CH 528142014
(43) Veröffentlichungstag der Anmeldung: 08.02.2017
(73) Patentinhaber: Villiger Public-Systems GmbH, 5647 Oberrüti (CH)
(72) Erfinder: VILLIGER, Paul, CH-5647 Oberrüti (CH)
(74) Vertreter: Spierenburg, Pieter
(86) Internationale Anmeldenummer: PCT/IB2015/051980
(87) Internationale Veröffentlichungsnummer: WO 2015/150956

(56) Entgegenhaltungen:
- EP-A1- 1 008 537
- EP-A1- 1 084 069
- WO-A1-2012/032438
- WO-A1-2015/001401
- US-A- 2 933 210

## Beschreibung

Die Erfindung betrifft eine Hebevorrichtung auf einem Lastkraftfahrzeug zum Anheben und Entleeren von Abfallsammelbehältern nach dem Oberbegriff des Patentanspruchs 1.

### STAND DER TECHNIK

Eine solche Hebevorrichtung zum Handhaben und Entleeren von Abfallsammelbehältern ist beispielsweise bekannt aus WO-A-2012/032438. Die dort beschriebene Hebevorrichtung weist ein Kupplungswerkzeug zum Koppeln mit einem Abfallsammelbehälter auf, und ist mit einer Drehplattform und einer darauf angebrachte Stütze für einen teleskopisch ausfahrbaren Ausleger versehen. Die Stütze weist verschachtelte C-Profile auf, welche teleskopisch verschiebbar sind. Der Ausleger ist vertikal um eine Schwenkachse schwenkbar am freien Endbereich der Stütze befestigt. Ferner ist ein Schwenkzylinder zwischen dem Ausleger und der Stütze vorgesehen, um den Ausleger in einem bestimmten Schwenkwinkel bezüglich der Horizontale zu bringen.

Die C-Profile dieser Hebevorrichtung weisen ovale Aussparungen zur Gewichtseinsparung auf, wodurch die Stütze der obigen Hebevorrichtung eine geringere Torsionssteifigkeit aufweist. Ferner ist die Konstruktion der Aufhängung des Auslegers am oberen Ende der teleskopisch ausfahrbaren Stütze relativ schwach. Dadurch können mögliche Schwingungen eines anzuhebenden Abfallsammelbehälters zu wenig gedämpft werden, wodurch eine grössere Unfallgefahr besteht.

### AUFGABE DER ERFINDUNG

Es ist nun Aufgabe der vorliegenden Erfindung, eine Hebevorrichtung der vorgenannten Art so zu verbessern, dass die Konstruktion der Hebevorrichtung wesentlich stabiler ist und eine grössere Torsionssteifigkeit aufweist, um mögliche Schwingungen eines angehobenen Abfallsammelbehälters ausreichend auffangen und somit das Unfallrisiko stark verringern zu können.

### GEGENSTAND DER ERFINDUNG

Diese Aufgabe wird durch eine Hebevorrichtung geeignet zur Verwendung auf einem Lastkraftfahrzeug mit den Merkmalen des Patentanspruchs 1 gelöst.

Die erfindungsgemässe Hebevorrichtung hat den grossen Vorteil, dass sie neben den Vorteilen der bekannten Hebevorrichtung eine wesentlich grössere Stabilität durch eine grosse Steifigkeit aufweist und eine sichere und gefahrlose Bedienung ermöglicht.

### BESCHREIBUNG EINES AUSFÜHRUNGSBEISPIELES DER ERFINDUNG

Weitere Vorteile der Erfindung ergeben sich aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:
- Fig. 1: einen Kran auf einem Lastkraftwagen in Draufsicht,
- Fig. 2: denselben Kran der Fig. 1 in perspektivischer Ansicht,
- Fig. 3: denselben Kran wie Fig. 1 in einem ersten ausgezogenen Zustand,
- Fig. 4: denselben Kran wie in Fig. 1 in einem zweiten ausgezogenen Zustand,
- Fig. 5: denselben Kran wie in Fig. 1 nach oben geschwenkt und ausgezogen,
- Fig. 6: denselben Kran wie in Fig. 1 in zusammengelegtem Zustand,
- Fig. 7: eine vergrösserte perspektivische Ansicht auf den Kran in zusammengelegten Zustand,
- Fig. 8: eine Obenansicht auf den Kran gemäss Figur 7,

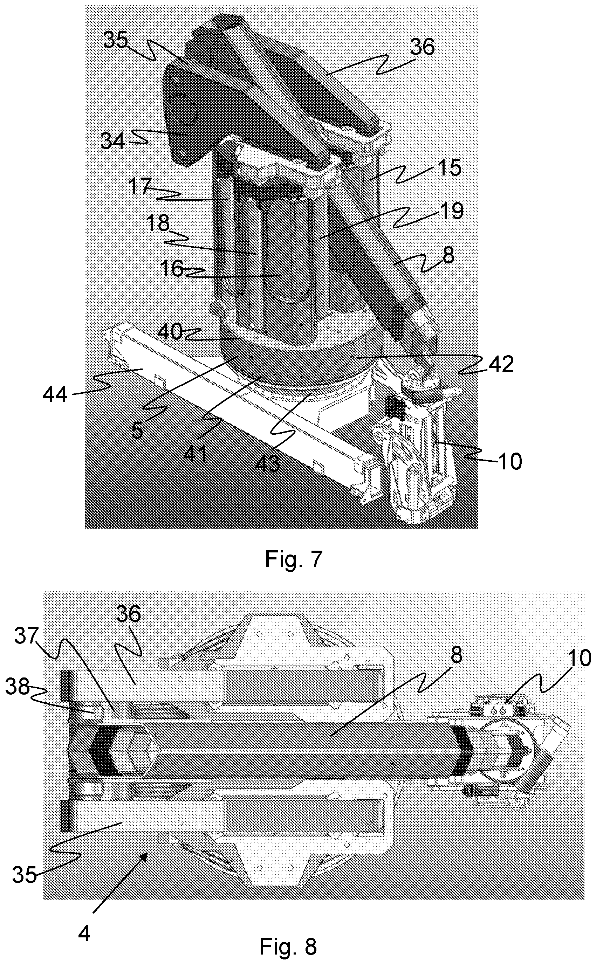

- Fig. 8: eine vergrösserte perspektivische Ansicht auf den Kran mit leicht ausgezogener Stütze,

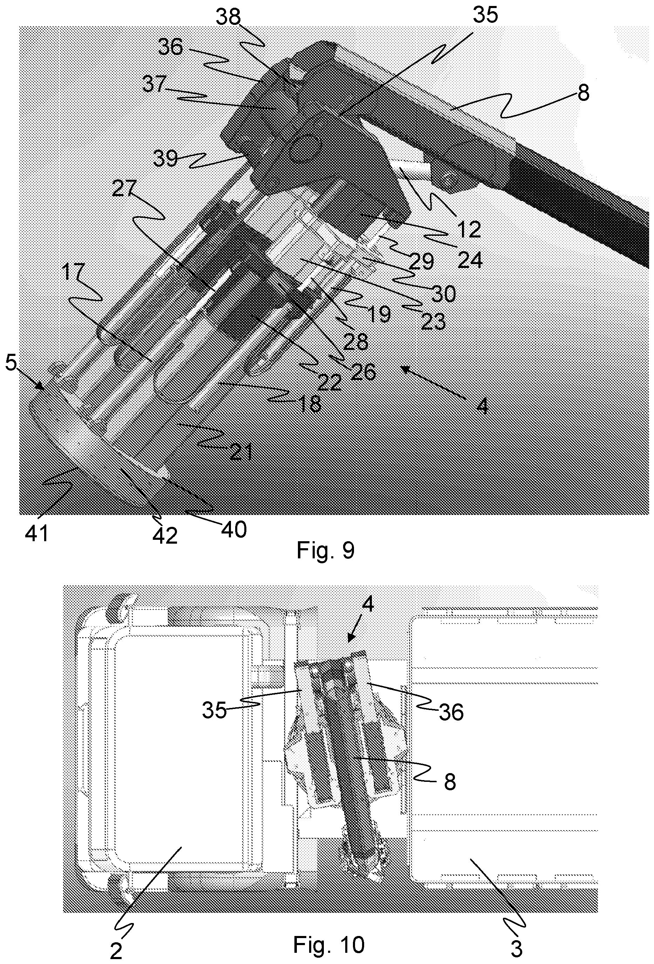

- Fig. 10: eine Obenansicht auf den Kran zwischen der Fahrerkabine und der Laderaum für Müll,

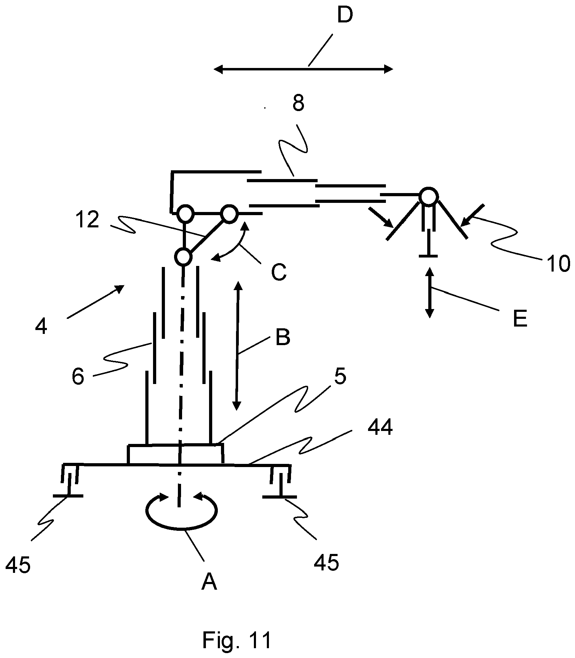

- Fig. 11: eine funktionelle Darstellung der Hebevorrichtung,

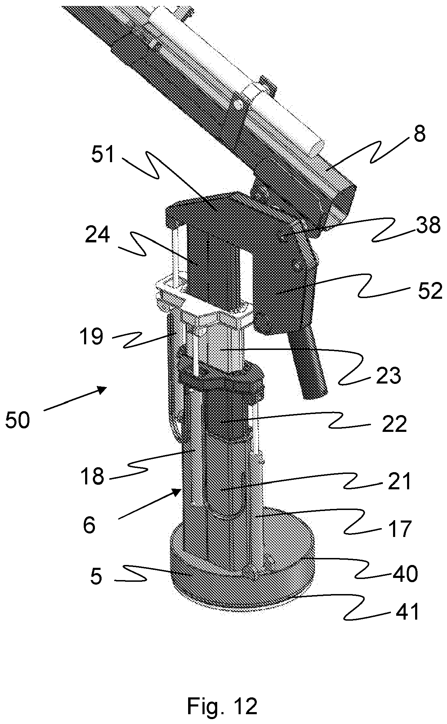

- Fig. 12: eine zweite, vereinfachte Ausführung des Krans in perspektivischer Ansicht,

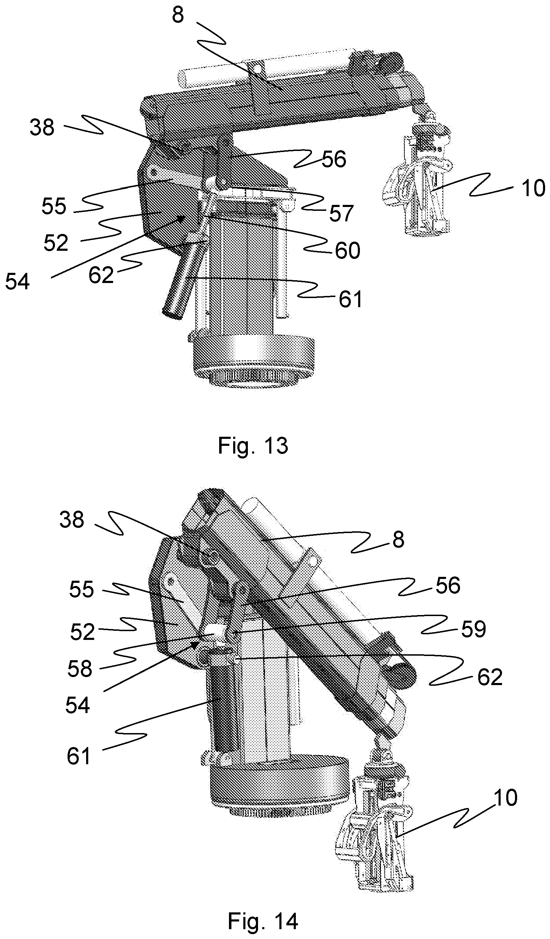

- Fig. 13: denselben Kran wie in Fig. 12 von der gegenüberliegenden Seite in einer erhobenen Stellung,
- Fig. 14: denselben Kran wie in Fig. 13 in einer gesenkten Stellung, und

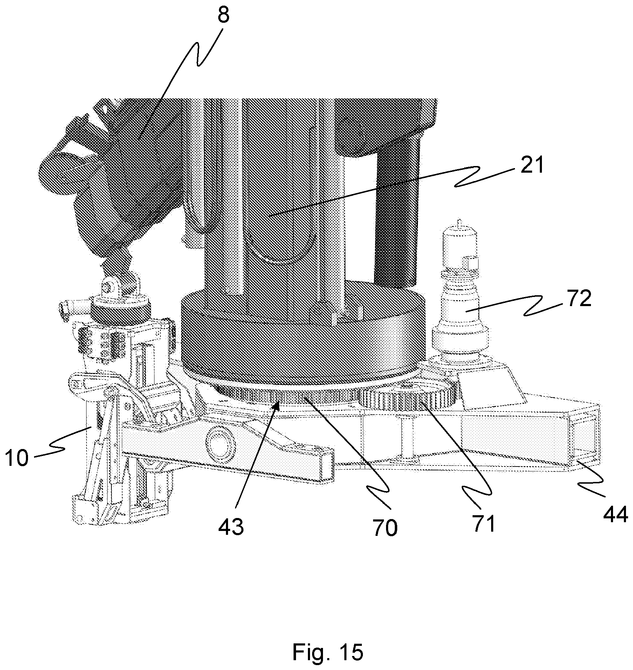

- Fig. 15: eine Detaildarstellung des Antriebs der Drehplattform des Krans.

In den Figuren sind dieselben Elemente mit denselben Bezugszeichen versehen, wenn nicht anders erwähnt ist.

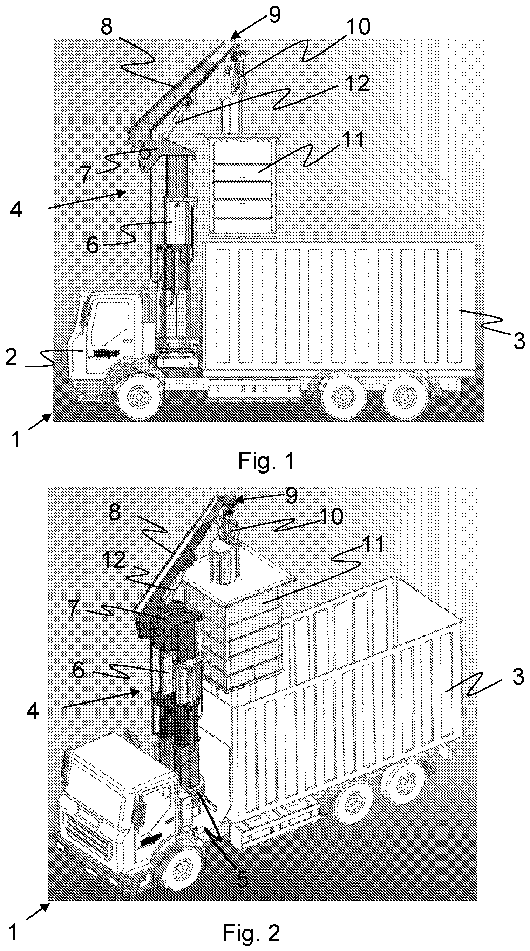

In den Figuren 1 und 2 ist ein Lastkraftwagen 1 mit einer Fahrerkabine 2 und einem Laderaum 3 für Müll gezeigt. Zwischen der Fahrerkabine 2 und dem Laderaum 3 ist eine Hebevorrichtung oder Kran 4 auf einer Drehplattform 5 angeordnet. Der Kran 4 weist eine teleskopisch ausfahrbare Stütze 6, einen an ihrem oberen Ende befestigten Trägerkopf 7 mit Drehachse und einen teleskopisch ausfahrbaren Ausleger 8 auf. Am äusseren Ende 9 des Auslegers 8 ist ein Kupplungswerkzeug 10 angeordnet, an welchem ein Abfallsammelbehälter 11 angehängt ist. Zwischen dem Trägerkopf 7 und dem Ausleger 8 ist ein Hubelement 12 angeordnet, welches als Schwenkzylinder oder als Kniehebelmechanismus ausgebildet ist und den vertikalen Schwenkwinkel zwischen dem Trägerkopf 7 und dem Ausleger 8 bestimmt.

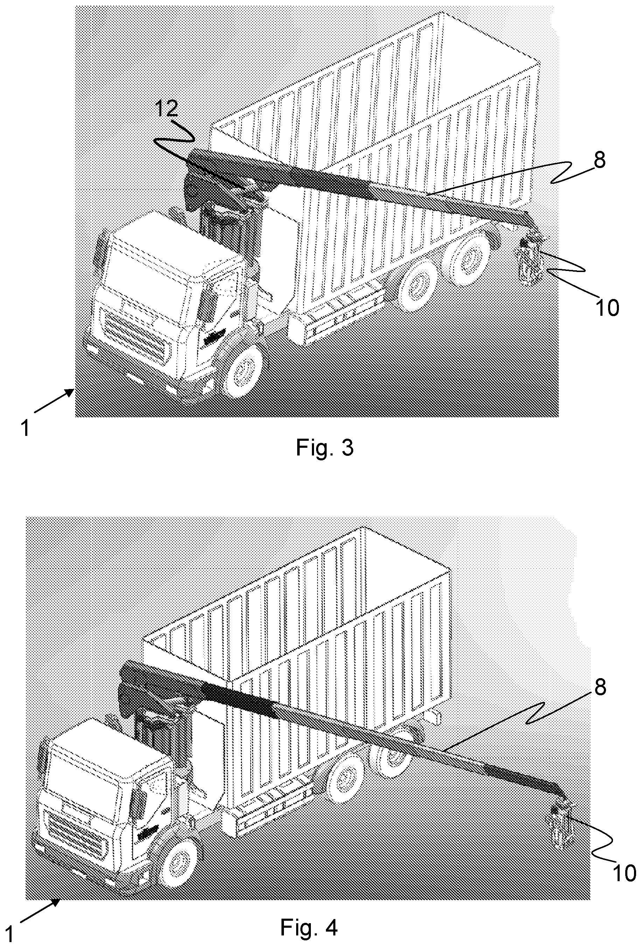

In Figur 3 ist der Ausleger 8 in einer ersten ausgezogenen Position und in Figur 4 in einer zweiten, weiter ausgezogenen Position gezeigt, wobei der Ausleger 8 in etwa horizontal ist. Der horizontale Schwenkwinkel wird in zusammengelegten Zustand der Stütze 4 durch den Laderaum 3 eingeschränkt: einerseits durch den Ausleger 8 und andererseits durch den Trägerkopf 7 mit dem anscharnierten Ende des Auslegers 8.

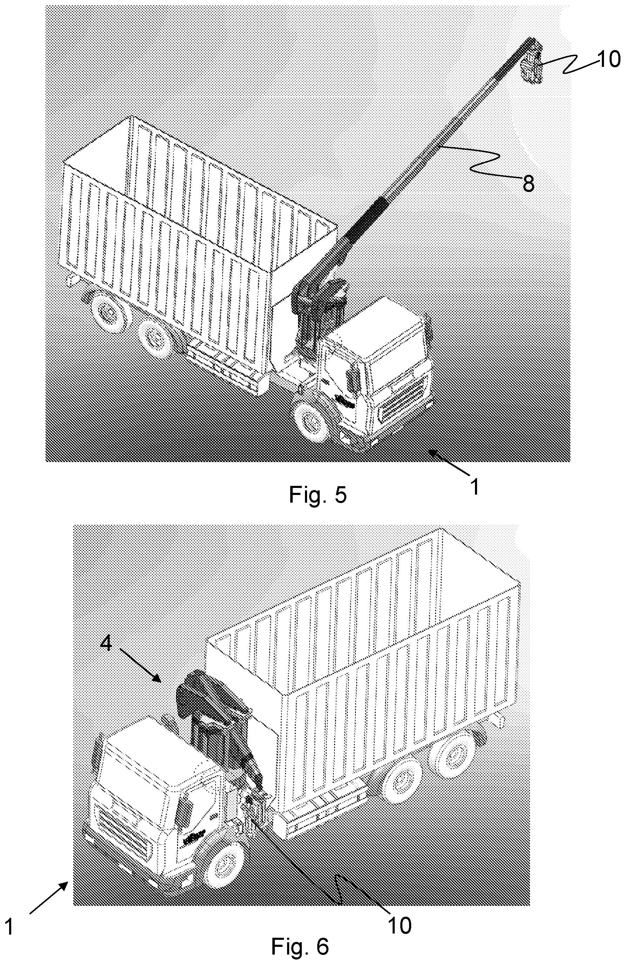

In Figur 5 ist der Ausleger 8 in der zweiten, weiter ausgezogenen Position gezeigt, wobei der vertikale Schwenkwinkel mittels des Schwenkzylinders 12 vergrössert worden ist.

Figur 6 zeigt den Kran 4 in einem sehr kompakten, zusammengelegten Zustand, so dass die Aussenkonturen des Krans 4 nicht über die Breite der Fahrerkabine 2 und der Breite des Laderaums 3 hinausgehen. Dies geht noch deutlicher aus der Figur 10 hervor, in welcher der zusammengelegte Kran 4 in Obenansicht gezeigt ist.

In den Figuren 7 bis 9 ist der Kran 4 ist in grösseren Details ersichtlich. Die Stütze 6 besteht aus zwei teleskopisch ausfahrbaren, identisch ausgebildeten Profile oder Innenläufer 15 und 16. Die Innenläufer 15 und 16 können mittels Hubzylinder 17, 18 und 19 angehoben werden. Wie aus Figur 9 ersichtlich bestehen die Innenläufer 15 und 16 aus je aus einem Festrohr 21 und drei, teleskopisch ineinander schiebbaren Läufer 22, 23 und 24. Der zweite Läufer 22 weist am oberen Ende einen ersten Absatz 26 auf, gegen welchen sich die Hubstange 27 des Hubzylinders 17 abstützt und an dessen Unterseite der zweite Hubzylinder 18 befestigt ist, während die Hubstange 28 des Hubzylinders 18 den ersten Absatz 26 transportiert. Der dritte Läufer 23 ist oben ebenfalls mit einem ähnlichen zweiten Absatz 30 versehen, welcher jedoch gegenüber dem ersten Absatz 26 versetzt um 90° angeordnet ist. Die Hubstange 28 stützt sich wiederum gegen diesen zweiten Absatz 30 und die Hubstange 29 des Hubzylinders 19 transportiert den zweiten Absatz 30. Der Innenläufer oder vertikale Teleskop 16 ist ähnlich wie der Innenläufer oder vertikale Teleskop 15 jedoch spiegelsymmetrisch dazu aufgebaut.

Der Trägerkopf 7 ist L-förmig mit einer zur Stütze 6 überhangenden Trägerplatte 34 und besteht aus zwei identischen Teilstücken 35 und 36, welche im Wesentlichen trapezförmig ausgebildet und massiv aus einem Metall, vorzugsweise Stahl, gefertigt sind. Die beiden Teilstücke 35 und 36 sind auf der in den Figuren gezeigten linken Seite durch die trapezförmige Trägerplatte 34 verbreitert und in diesem Bereich durch ein Querrohr oder Torsionsrohr 37 miteinander verbunden. Oberhalb des Querrohres 37 ist die Schwenkachse 38 des Auslegers 8 angeordnet und unterhalb des Querrohres 37 ist eine Achse 39 zwischen den Teilstücken 35 und 36 vorgesehen, welche zur Abstützung des Schwenkzylinders 12 dient.

Die Plattform 5 besteht aus zwei kreisförmigen Scheiben 40 und 41, welche von einem ringförmigen Mantel 42 auf einem Abstand zueinander verbunden sind. Das untere Festrohr 21 durchbohrt die obere Scheibe 40 und steht mit seinem unteren Ende auf der unteren Scheibe 41. Dieses metallische Festrohr 21 ist nun an der Umrandung bei der Durchbohrung an der oberen Scheibe 40 und am unteren Ende an der unteren Scheibe 41 angeschweisst. Damit ist eine sehr stabile und torsionssteife Verbindung zwischen der Stütze 4 und der Plattform 5 gewährleistet.

Die Innenläufer 15 und 16 sind aus einem Baustahl oder Feinkornstahl mit der Bezeichnung ST37 bis ST52 und Domex 700 mit einer zugelässigen Spannung von 420 N/mm² bis 1200 N/mm² hergestellt, und weisen eine Materialdicke von 4 bis 10 mm auf. Die Innenläufer 15 und 16 weisen ferner eine sechseckige Grundfläche mit zwei parallelen längeren Seiten auf. Es versteht sich, dass auch andere Grundflächen für die Stabilität der Stütze 6 geeignet sind. Beispielsweise könnte eine rechteckige oder fünfeckige Grundfläche vorgesehen sein. Es hat sich aber herausgestellt, dass die sechseckige Grundfläche eine besonders hohe Torsionsstabilität aufweist.

Wie in Figur 7 dargestellt, ist die Drehplattform 5 mittels eines aussen verzahnten Drehkranzes 43 auf einem Abstützchassis 44 geschraubt. Das Abstützchassis 44 ist hinter der Fahrerkabine 2 am Chassis des Lastkraftwagens 1 montiert. Die Drehachse des Drehkranzes 43 wird über einem Ritzel und einem Planetengetriebemotor mit Inkrementgeber betrieben. Die Einstellung der Drehachse ist somit von 0° bis 360° mit einer elektronischen Steuerung frei programmierbar.

Die beiden Innenläufer oder vertikale Teleskope 15 und 16 sind mit einem Strecken-Messsystem mit einer Auflösung von 0,5 mm ausgerüstet. Somit kann jeder Punkt in der Höhe (Ordinate) frei programmiert und mittels der elektronischen Steuerung angefahren werden.

Ebenfalls ist der Ausleger 8, welcher aus mehreren teleskopisch ausfahrbaren Läufern besteht, mit einem ähnlichen Strecken-Messsystem mit einer Auflösung von 0,5 mm ausgerüstet. Somit kann jeder Punkt in der Horizontalen (Abzisse) frei programmiert und mittels der elektronischen Steuerung angefahren werden.

Die Funktionen der Hebevorrichtung oder Kran 4 sind nun in Figur 11 dargestellt. Die Plattform 5 auf dem Abstützchassis 44 ist um die Rotationsachse A frei zu einem beliebigen Winkel zwischen 0° und 360° drehbar. Die teleskopisch ausfahrbare Stütze 6 kann längs der vertikalen Richtung B verkürzt oder verlängert werden. Der Schwenkzylinder 12 ist in einer Richtung C in einem spitzen Winkel zur Horizontale bewegbar. Da der Schwenkzylinder 12 mit seinen Enden an der Stütze 6 und am Ausleger 8 befestigt ist, ändert sich der spitzen Winkel bei grösserem Hub. Der teleskopisch ausfahrbare Ausleger 8 ist in horizontaler Richtung D bewegbar, wobei diese Richtung D abhängig vom Hub des Schwenkzylinders 12 einen mehr oder weniger grossen spitzen Winkel zur Horizontale bilden kann. Schlussendlich gibt es beim Kupplungswerkzeug 10 eine Bewegung in vertikaler Richtung E. Somit ist die Hebevorrichtung oder der Kran 4 ein Roboter mit fünf Freiheitsgraden A bis E, welcher mittels der programmierbaren elektronischen Steuerung das Kupplungswerkzeug 10 an einen beliebigen Ort innerhalb des Aktionsradius des Krans 4 hinführen lässt.

In Figur 12 ist eine zweite Ausführung des Krans 50 mit einer einzigen teleskopisch ausfahrbaren Stütze 6 gezeigt, welche hier ebenfalls aus einem Innenläufer 16 mit einem Festrohr 21 und drei teleskopisch ineinander verschiebbaren Läufern 22, 23 und 24 besteht. Der Trägerkopf 51 ist L-förmig ausgebildet und einseitig überhangend zur Stütze 6 mit einer trapezförmigen Trägerplatte 52 versehen. Der Trägerkopf 51 ist am Kopf des oberen Läufers 24 verschweisst. Der Ausleger 8 ist mit der Schwenkachse 38 oben an der Trägerplatte 52 vorgesehen.

Wie aus den Figuren 13 und 14 ersichtlich ist unterhalb der Schwenkachse 38 ein Kniehebelmechanismus 54 angeordnet, der aus einem plattenförmigen Unterbein 55, zwei plattenförmigen Oberbeinen 56 und einem Kniestück 57 besteht. Das Kniestück 57 weist Rohr 58 und einen Stift 59 auf, welches innerhalb des Rohrs 58 frei drehbeweglich ist. Das Rohr 58 ist zwischen den unteren Enden der beiden Oberbeine 56 befestigt und der Stift 59 ist am oberen Ende des Unterbeins 55 befestigt. An dem Rohr 58 greift eine Kolbenstange 60 eines Druckzylinders 61 an, welcher mit einer Drehachse 62 an der Trägerplatte 52 angelenkt ist. Die Drehachse 62 ist vertikal unterhalb der Schwenkachse 38 angeordnet.

Figur 15 ist eine perspektivische Detaildarstellung der zweiten Ausführung des Krans 50 im unteren Bereich. Der Drehkranz 43 ist mit einem Aussenverzahnung 70 versehen, in welches ein Ritzel 71 eingreift, das andererseits von einem Planetengetriebemotor 72 mit einem nicht-dargestellten Inkrementgeber angetrieben wird. Somit lassen sich sehr geringe Drehungen des Zahnkranzes 43 bewirken.

## Patentansprüche

1. Hebevorrichtung (4), geeignet zur Verwendung auf einem Lastfahrzeug (1), zum Anheben und Entleeren von Abfallsammelbehältern mit einem teleskopisch ausfahrbaren Ausleger (8), welcher ein Kupplungswerkzeug (10) zum Koppeln mit einem Abfallsammelbehälter aufweist, und mit einer auf einer Drehplattform (5) angebrachten, ausfahrbaren Stütze (6) mit mindestens einem verschachtelten, teleskopisch ausfahrbaren Profil, wobei der Ausleger am oberen Endbereich der Stütze (6) mit einem Schwenkelement (12) zwischen Ausleger und Stütze vorgesehen ist, so dass der Ausleger (8) in einer vertikalen Ebene um eine Schwenkachse schwenkbar ist, **dadurch gekennzeichnet, dass** das ausfahrbare Profil als Innenläufer (15, 16) mit einem Festrohr (21) und Läufern (22, 23, 24) mit einer vieleckigen Grundfläche ausgebildet sind, und ein Trägerkopf (7) am Endbereich der Stütze (6) vorgesehen ist, welcher L-förmig mit einer zur Stütze (6) überhangenden Trägerplatte (34; 52) ausgebildet ist, welcher die Schwenkachse (38) des Auslegers (8) und eine Abstützung für das Schwenkelement (12) aufweist.

2. Hebevorrichtung (4) nach Anspruch 1, **dadurch gekennzeichnet, dass** das Schwenkelement als Schwenkzylinder (12) oder als Kniehebelmechanismus (54) ausgebildet ist.

3. Hebevorrichtung nach Anspruch 1 oder 2, **dadurch gekennzeichnet, dass** der Trägerkopf (7) aus zwei identischen, parallelen Teilstücken (35, 36) besteht, die mittels eines Querrohrs (37) miteinander verbunden sind.

4. Hebevorrichtung (1) nach Anspruch3, **dadurch gekennzeichnet, dass** das Teilstück (35, 36) des Trägerkopfs (7) im Wesentlichen trapezförmig massiv aus Metall geformt ist, wobei das Teilstück (35, 36) mit der längsten Seite am Endbereich der Stütze (6) befestigt ist und das Querrohr (37) seitlich zwischen den Teilstücken (35, 36) vorgesehen ist.

5. Hebevorrichtung (1) nach einem der Ansprüche 1 bis 4, **dadurch gekennzeichnet, dass** die Schwenkachse (38) des Auslegers (8) oberhalb des Querrohres (37) und das Schwenkelement (12) an einer Achse (39) unterhalb des Querrohres (37) angebracht ist.

6. Hebevorrichtung nach einem der Ansprüche 1 bis 5, **dadurch gekennzeichnet, dass** die Innenläufer (15, 16) aus einem Stahl mit einer Materialdicke von 4 bis 10 mm hergestellt sind.

7. Hebevorrichtung nach Anspruch 6, **dadurch gekennzeichnet, dass** die Innenläufer (15, 16) eine sechseckige Grundfläche mit zwei parallelen längeren Seiten aufweisen.

8. Hebevorrichtung nach einem der Ansprüche 1 bis 7, **dadurch gekennzeichnet, dass** die Drehplattform (5) eine obere Scheibe (40) und eine zu dieser beabstandete untere Scheibe (41) aufweist, und das Festrohr (21) sowohl an der oberen Scheibe (40) und als auch an der unteren Scheibe (41) befestigt ist.

9. Hebevorrichtung nach Anspruch 8, **dadurch gekennzeichnet, dass** am oberen Ende eines jeweiligen Läufers (22, 23) ein vorstehender Absatz (26, 30) vorgesehen ist, an welcher einerseits ein Hubzylinder (18, 19) befestigt und an welcher andererseits die Hubstange (27, 28) des untenliegenden Hubzylinders (17, 18) angreift.

10. Hebevorrichtung nach einem der Ansprüche 1 bis 9, **dadurch gekennzeichnet, dass** eine programmierbare Steuerung vorgesehen ist, um die Bewegungen der Stütze (6), des Auslegers (8) und des Kupplungswerkzeuges (10) koordiniert zu steuern.

## Claims

1. A lifting device (4) suitable for use on a heavy goods vehicle (1) for lifting and emptying waste collection containers, having a telescopically extensible boom (8), which has a coupling tool (10) for coupling to a waste collection container, and having an extensible support (6), which is attached on a rotating platform (5), having at least one interleaved, telescopically extensible profile, wherein the boom is provided at the upper end region of the support (6) with a pivot element (12) between boom and support, so that the boom (8) is pivotable in a vertical plane about a pivot axis, **characterized in that** the extensible profile is formed as internal runners (15, 16) having a fixed tube (21) and runners (22, 23, 24) having a polygonal footprint, and a carrier head (7) is provided at the end region of the support (6), which is formed as L-shaped having a carrier plate (34; 52) overhanging in relation to the support (6), which carrier plate has the pivot axis (38) of the boom (8) and a support for the pivot element (12).

2. The lifting device (4) according to Claim 1, **characterized in that** the pivot element is designed as a pivot cylinder (12) or as a knee lever mechanism (54).

3. The lifting device according to Claim 1 or 2, **characterized in that** the carrier head (7) consists of two identical, parallel parts (35, 36), which are connected to one another by means of a cross tube (37).

4. The lifting device (1) according to Claim 3, **characterized in that** the part (35, 36) of the carrier head (7) is formed essentially trapezoidal in a solid manner from metal, wherein the part (35, 36) having the longest side is fastened on the end region of the support (6) and the cross tube (37) is provided laterally between the parts (35, 36).

5. The lifting device (1) according to any one of Claims 1 to 4, **characterized in that** the pivot axis (38) of the boom (8) is attached above the cross tube (37) and the pivot element (12) is attached on an axis (39) below the cross tube (37).

6. The lifting device according to any one of Claims 1 to 5, **characterized in that** the internal runners (15, 16) are produced from a steel having a material thickness of 4 to 10 mm.

7. The lifting device according to Claim 6, **characterized in that** the internal runners (15, 16) have a hexagonal footprint having two parallel longer sides.

8. The lifting device according to any one of Claims 1 to 7, **characterized in that** the rotating platform (5) has an upper disk (40) and a lower disk (41) spaced apart therefrom, and the fixed tube (21) is fastened both on the upper disk (40) and also on the lower disk (41).

9. The lifting device according to Claim 8, **characterized in that** a protruding shoulder (26, 30) is provided on the upper end of a respective runner (22, 23), on which a lifting cylinder (18, 19) is fastened on one side and on which the lifting rod (27, 28) of the lower lifting cylinder (17, 18) engages on the other side.

10. The lifting device according to any one of Claims 1 to 9, **characterized in that** a programmable controller is provided to control the movements of the support (6), the boom (8), and the coupling tool (10) in coordination.

## Revendications

1. Dispositif de levage (4) apte à être utilisé sur un camion (1) pour lever et vider des conteneurs de collecte de déchets, comprenant une flèche extensible télescopiquement (8) qui présente un outil d'accouplement (10) pour l'accouplement à un conteneur de collecte de déchets et un support extensible (6) qui est monté sur une plate-forme rotative (5) et présente au moins un profilé emboîté, extensible télescopiquement, la flèche étant prévue avec un élément pivotant (12) entre la flèche et le support dans la zone d'extrémité supérieure du support (6), de sorte que la flèche (8) peut pivoter dans un plan vertical autour d'un axe de pivotement, **caractérisé en ce que** le profilé extensible étant réalisé sous la forme d'une coulisse intérieure (15, 16) avec un tube fixe (21) et des coulisses (22, 23, 24) ayant une surface de base polygonale, et une tête porteuse (7) étant prévue dans la zone d'extrémité du support (6), laquelle est réalisée en forme de L avec une plaque porteuse (34 ; 52) en surplomb par rapport au support (6), qui présente l'axe de pivotement (38) de la flèche (8) et un appui pour l'élément pivotant (12).

2. Dispositif de levage (4) selon la revendication 1, **caractérisé en ce que** l'élément pivotant est réalisé sous la forme d'un vérin pivotant (12) ou d'un mécanisme à genouillère (54).

3. Dispositif de levage selon la revendication 1 ou 2, **caractérisé en ce que** la tête porteuse (7) est constituée de deux parties parallèles identiques (35, 36) qui sont reliées entre elles au moyen d'un tube transversal (37).

4. Dispositif de levage (1) selon la revendication 3, **caractérisé en ce que** l'élément partiel (35, 36) de la tête porteuse (7) est une pièce massive en métal de forme sensiblement trapézoïdale, l'élément partiel (35, 36) étant fixée par son côté le plus long à la zone d'extrémité du support (6) et le tube transversal (37) étant prévu latéralement entre les éléments partiels (35, 36).

5. Dispositif de levage (1) selon l'une des revendications 1 à 4, **caractérisé en ce que** l'axe de pivotement (38) de la flèche (8) est disposé au-dessus du tube transversal (37) et l'élément pivotant (12) sur un axe (39) au-dessous du tube transversal (37).

6. Dispositif de levage selon l'une des revendications 1 à 5, **caractérisé en ce que** les coulisses intérieures (15, 16) sont en acier d'une épaisseur de matériau de 4 à 10 mm.

7. Dispositif de levage selon la revendication 6, **caractérisé en ce que** les coulisses intérieures (15, 16) présentent une surface de base hexagonale avec deux côtés longs parallèles.

8. Dispositif de levage selon l'une des revendications 1 à 7, **caractérisé en ce que** la plate-forme rotative (5) présente un plateau supérieur (40) et un plateau inférieur (41) espacé de celui-ci, et le tube fixe (21) est fixé à la fois au plateau supérieur (40) et au plateau inférieur (41).

9. Dispositif de levage selon la revendication 8, **caractérisé en ce qu'**un épaulement en saillie (26, 30) est prévu à l'extrémité supérieure d'une coulisse respective (22, 23), auquel, d'une part, est fixé un vérin de levage (18, 19) et sur lequel, d'autre part, agit la tige de levage (27, 28) du vérin de levage inférieur (17, 18).

10. Dispositif de levage selon l'une des revendications 1 à 9, **caractérisé en ce qu'**une commande programmable est prévue pour commander de manière coordonnée les mouvements du support (6), de la flèche (8) et de l'outil d'accouplement (10).
